(19) Europäisches Patentamt
European Patent Office
Office européen des brevets

(11) Veröffentlichungsnummer: **0 031 397**
**B1**

(12) # EUROPÄISCHE PATENTSCHRIFT

(45) Veröffentlichungstag der Patentschrift: **23.06.82**

(51) Int. Cl.[3]: **C 09 D 3/80,** C 08 L 33/14, C 08 F 20/38

(21) Anmeldenummer: **80104458.7**

(22) Anmeldetag: **29.07.80**

(54) **Flüssiges, durch UV-Strahlung härtbares Überzugs- und Bindemittel und Verfahren zu seiner Herstellung.**

(30) Priorität: **10.11.79 DE 2945549**

(43) Veröffentlichungstag der Anmeldung: **08.07.81 Patentblatt 81/27**

(45) Bekanntmachung des Hinweises auf die Patenterteilung: **23.06.82 Patentblatt 82/25**

(84) Benannte Vertragsstaaten: **AT BE CH DE FR GB IT LI NL SE**

(56) Entgegenhaltungen:
**DE-A-2 533 125**
**DE-A-2 737 406**

(73) Patentinhaber: **Röhm GmbH, Kirschenallee Postfach 4242, D-6100 Darmstadt 1 (DE)**

(72) Erfinder: **Quis, Peter, Dr., Pfannmüllerweg 26, D-6100 Darmstadt-Neu-Kranichstein (DE)**
Erfinder: **Schroth, Theodor, Rheinstrasse 23, D-6097 Trebur (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

EP 0 031 397 B1

# Flüssiges, durch UV-Strahlung härtbares Überzugs- und Bindemittel und Verfahren zu seiner Herstellung

Die Erfindung liegt auf dem Gebiet der flüssigen, durch UV-Strahlung härtbaren Überzugs- und Bindemittel. Bindemittel dieser Art werden in Druckfarben, Lacken und anderen Überzugsmischungen verwendet, weil sie gegenüber den herkömmlichen, lösungsmittelhaltigen Beschichtungsmischungen eine Reihe von Vorzügen haben. Da sie frei von organischen Lösungsmitteln sind und als Bindemittel nur hochsiedende, flüssige Verbindungen enthalten, sind sie geruchlos, nicht feuergefährlich und erfordern keine Vorrichtungen zum Absaugen von Dämpfen bei der Härtung.

Bekannte Bindemittel dieser Art sind ungesättigte Oligomere, die als styrolfreie Polyesterharze, Urethan-acrylate und Epoxy-acrylate bezeichnet werden. Urethan-acrylate entstehen bei der Umsetzung von Polyisocyanaten mit Hydroxyalkylacrylaten. In analoger Weise lassen sich niedrigmolekulare Epoxidharze mit Acrylsäure zu Epoxy-acrylaten umsetzen. In allen Fällen erhält man Oligomere mit einem Molekulargewicht in der Größenordnung von 1000 oder mehr und mit einer oder mehreren polymerisierbaren Kohlenstoffdoppelbindungen pro Molekül. Bei der Einwirkung von UV-Strahlung in Gegenwart von geeigneten Beschleunigern tritt durch Polymerisation der ungesättigten Gruppen Härtung ein.

Die bekannten UV-härtbaren Bindemittel haben Nachteile, die ihre Anwendung begrenzen. Größtenteils handelt es sich um feste oder hochviskose Harze, die nicht allein als Bindemittel verwendet werden können; man muß sie zusammen mit flüssigen niedermolekularen Monomeren einsetzen. Ein weiterer Nachteil ist der verhältnismäßig hohe Preis, der auf die Anwendung teurer Ausgangsstoffe zurückzuführen ist. Einige dieser Harze sind nicht völlig farblos oder sie vergilben allmählich im ausgehärteten Zustand, was beispielsweise bei der Verwendung als Klarlack störend ist.

Man hat daher nach anderen Reaktionstypen gesucht, mit denen sich ungesättigte Oligomere auf einfache Weise aufbauen lassen. In der US-A 2 759 913 wird die Polyaddition von Verbindungen mit mehreren reaktiven Wasserstoffatomen an Verbindungen mit mehreren aktivierten Doppelbindungen beschrieben. Zu den Verbindungen mit mehreren reaktiven Wasserstoffatomen zählen solche, die zwei oder mehr Amino-, Amido-, Hydroxy- oder Merkapto-Gruppen oder an Kohlenstoffatome gebundene aktivierte Wasserstoffatome enthalten. Als Verbindungen mit mehreren aktivierten Kohlenstoffdoppelbindungen werden hauptsächlich Acrylderivate von mehrfunktionellen Verbindungen, beispielsweise Diester von Glykolen oder Diamide von Diaminen, genannt. Im allgemeinen werden die Ausgangsstoffe in äquimolaren Verhältnissen eingesetzt, so daß lineare oder verzweigte Polymere ohne ungesättigte Gruppen entstehen. Erst bei einem stöchiometrischen Überschuß der ungesättigten Komponente könnten nach diesem Verfahrensprinzip auch ungesättigte, polymerisierbare Oligomere entstehen.

Ein Beispiel für derartige Oligomere sind die strahlungshärtbaren Additionsprodukte gemäß der DE-OS 2 346 424. Sie werden durch Michael-Addition von Aminen an mehrfach ungesättigte Acrylverbindungen hergestellt, wobei das stöchiometrische Verhältnis so gewählt wird, daß an jedes Molekül der mehrfach ungesättigten Acrylverbindung im Mittel ein Amin-Molekül addiert wird. Ziel dieses Vorgehens ist nicht die Oligomerisierung, sondern die Einführung von tertiären Aminogruppen, die einen vorteilhaften Einfluß auf das Polymerisationsverhalten ausüben sollen. Es wird ausdrücklich davor gewarnt, höher funktionelle Amine, insbesondere solche mit höheren Molekulargewichten, mit einem stöchiometrischen Überschuß der Polyacrylverbindung umzusetzen, da die erhaltenen Produkte häufig fest und daher nur schwer anzuwenden sind. Daher sind mehrfach ungesättigte flüssige Oligomere nach diesem Umsetzungsprinzip nicht zugänglich.

Der Erfindung liegt die Aufgabe zugrunde, flüssige, durch UV-Strahlung härtbare Überzugs- und Bindemittel mit einer anwendungstechnisch günstigen Viskosität aus leicht zugänglichen Ausgangsstoffen herzustellen, wobei durch einen hohen Gehalt an ungesättigten Gruppen eine schnelle und vollständige Härtung durch UV-Strahlung erreichbar ist. Das Bindemittel soll farblos sein und auch nach der Härtung nicht vergilben. Weitere Voraussetzungen für den Einsatz als strahlungshärtendes Bindemittel ist Geruchlosigkeit und eine geringe bzw. völlig fehlende Flüchtigkeit.

Die Überzugs- und Bindemittel gemäß dem Hauptanspruch erfüllen diese Forderungen. Durch die Beschränkung auf einen engen Molekulargewichtsbereich sind sie bei Raumtemperatur flüssig und verhältnismäßig niedrigviskos. Die niedrige Viskosität ist u. a. auf den verhältnismäßig unpolaren Charakter der Verbindungen zurückzuführen, während stärker polare Oligomere, an deren Aufbau Hydroxyl-, Amino-, Amido- oder Urethan-Gruppen beteiligt sind, die durch Wasserstoff-Brückenbildung oder Dipolwirkung stärkere zwischenmolekulare Wechselwirkungskräfte entfalten, höherviskos oder fest sind.

Die gute Härtbarkeit durch UV-Strahlung ist durch ein niedriges Doppelbindungsäquivalentgewicht begründet. Darunter wird der Quotient aus dem Molekulargewicht und der Zahl der ungesättigten Gruppen je Molekül verstanden. Im Falle, daß die Überzugs- und Bindemittel aus einem Gemisch von mehreren der formelmäßig gekennzeichneten Verbindungen besteht, wird der Quotient aus dem Gewichtsmittel des Molekulargewichts und dem darauf berechneten mittleren Gehalt an Doppelbindungen ermittelt. Das Doppelbindungsäquivalentgewicht liegt unter 500 und vorzugsweise

zwischen 120 und 250.

Die neuen Überzugs- und Bindemittel enthalten wenigstens ein Oligomeres der Formel

$$(CH_2=CH-CO-O)_mRO-CO-C_2H_4-(S-R')_n[S-C_2H_4-CO-OR(O-CO-CH=CH_2)_m]_p$$

worin

n = 0 oder 1,
m und p ganze Zahlen von 1 bis 3 sind mit der Einschränkung, daß $p=p^n$ ist,
R einen (m+1)-wertigen aliphatischen Rest mit 2 bis 12 Kohlenstoffatomen
R' einen (p+1)-wertigen organischen Rest mit einem Molekulargewicht von 28 bis 600 bedeuten

mit einem Doppelbindungsäquivalentgewicht von höchstens 500 und einem Molekulargewicht zwischen 370 und 1000.

Die Oligomeren werden hergestellt durch die Addition von Schwefelwasserstoff oder von Bis- oder Polymerkaptanen der Formel

$$HS-R'-(SH)_p$$

wobei R' und p die obengenannte Bedeutung haben, an Polyacrylverbindungen der Formel

$$(CH_2=CH-CO-O)_{m+1}R$$

Wenn Schwefelwasserstoff eingesetzt wird, ist n=0, d. h. es ist keine Gruppe (S−R') vorhanden. Für diesen Fall gilt p=1. Einen größeren Wert als 1 kann p nur haben, wenn für die Bildung des Oligomeren ein mehr als zweiwertiges Merkaptan eingesetzt wird. Dieser Sachverhalt wird durch die Bedingung $p=p^n$ ausgedrückt, wonach p nur dann einen von 1 abweichenden Wert haben kann, wenn n=1 ist.

Schwefelwasserstoff ist die bevorzugte Bildungskomponente für die neuen Oligomeren. Da er bei der Umsetzung mit der Polyacrylverbindung unter der Einwirkung eines basischen Katalysators schnell und vollständig gebunden wird, hat das Umsetzungsprodukt keinen Geruch nach Schwefelwasserstoff, zumindest wenn es nach der Umsetzung noch einige Zeit in der Wärme einer Vakuumbehandlung unterzogen worden ist.

Zwei- oder mehrfunktionelle Merkaptane als Bildungskomponente für die Oligomeren haben gegenüber Schwefelwasserstoff den Vorteil, daß sie leichter und genauer dosiert werden können, jedoch den Nachteil eines höheren Preises. Vorzugsweise werden Di- oder Polymerkaptane eingesetzt, worin R' ein aliphatischer, bifunktioneller Rest ist. Es kann sich um einen reinen aliphatischen Kohlenwasserstoffrest handeln, beispielsweise einen Butylenrest. Bevorzugt werden jedoch solche Reste R', die mehrere aliphatische Kohlenwasserstoffreste enthalten, welche untereinander durch Äther- (−O−) oder Estergruppen (−CO−O−) verknüpft sind. Die Merkaptogruppen sind in diesem Fall jeweils an einen aliphatischen Kohlenwasserstoffrest gebunden.

Beispiele für geeignete Bis- und Polymerkaptane sind

Dithioglykol
Butylen-dithioglykol
2,2'-Dimerkapto-diäthyläther
Glykol-dimerkaptoacetat
Glykol-dimerkaptopropionat
Trimethyloläthan-trithioglykolat
Trimethyloläthan-trimerkaptopropionat
Trimethylolpropan-trithioglykolat
Trimethylolpropan-trimerkaptopropionat
Pentaerythrit-tetrathioglykolat
Pentaerythrit-tetramerkaptopropionat.

Die Reste R' haben ein Molekulargewicht von wenigstens 28 und höchstens 600. Bei den letzteren kann es sich beispielsweise um Polyäther- oder Polyester-Ketten handeln. Es kann vorkommen, daß nicht sämtliche Merkaptogruppen eines höherfunktionellen Merkaptans bei der Bildung des Oligomeren mit einer ungesättigten Acrylgruppe reagieren. In diesem Fall enthält der Rest R' noch eine oder mehrere freie Merkaptogruppen.

Die Bildung des Oligomeren findet unter der Einwirkung von basischen Katalysatoren unter milden Bedingungen statt. Umsetzungstemperaturen von 20 bis 70° sind im allgemeinen gut geeignet. Als basische Katalysatoren können z. B. 0,05 bis 1 Gew.-% (bezogen auf das Gewicht des Reaktionsgemisches) an Natrium- oder Kaliumhydroxid (in alkoholischer Lösung) oder tertiäre

aliphatische Amine, wie Triäthylamin oder Tributylamin eingesetzt werden. Es ist vorteilhaft, den Katalysator nach der Umsetzung durch eine äquivalente Menge einer Säure, wie z. B. Phosphorsäure, zu neutralisieren oder, im Falle von niedrigsiedenden Aminen, durch Entgasen im Vakuum zu verflüchtigen. Bei der Umsetzung legt man vorzugsweise die Polyacrylverbindung in dem Umsetzungsgefäß vor und leitet den gasförmigen Schwefelwasserstoff bei der Reaktionstemperatur ein bzw. setzt das Merkaptan allmählich zu. Bei dieser Arbeitsweise ist stets ein Überschuß der Polyacrylverbindung vorhanden, so daß die Merkaptogruppen schnell durch die ungesättigten Gruppen der Polyacrylverbindung abgesättigt werden können. Erst mit fortschreitender Umsetzung wird häufiger der Fall eintreten, daß eine Merkaptogruppe mit einer Acrylgruppe eines bereits gebildeten Oligomermoleküls reagiert. Neben den formelmäßig dargestellten Oligomeren findet sich daher in der Regel ein gewisser Anteil von höheren Oligomeren. Häufig enthält das Umsetzungsprodukt mehrere verschiedene der formelmäßig dargestellten Oligomeren.

Die Polyacrylverbindungen der Formel

$$(CH_2{=}CH-CO-O)_{m+1}R$$

sind Ester der Acrylsäure von 2- bis 4wertigen aliphatischen Alkoholen oder Ätheralkoholen mit 2 bis 12 Kohlenstoffatomen. Dazu gehören Äthylenglykol, 1,2-Propylenglykol, 1,2- oder 1,4-Butylenglykol, Di-, Tri- und Tetraäthylenglykol, Glycerin, Trimethylolpropan, Pentaerythrit und andere. Die im Handel erhältlichen mehrfunktionellen Acrylester sind als technische Produkte häufig Gemische von verschiedenen Estern. Bei den Estern von drei- oder mehrfunktionellen Alkoholen sind manchmal nicht sämtliche Hydroxylgruppen verestert. Die mehrfunktionellen Acrylester werden mit dem Schwefelwasserstoff oder dem mehrfunktionellen Merkaptan in einem Molverhältnis umgesetzt, daß auf jedes Äquivalent des an Schwefel gebundenen Wasserstoffes wenigstens 1 Mol des mehrfunktionellen Acrylesters entfällt. Ein begrenzter Überschuß des mehrfunktionellen Acrylesters ist nicht von Nachteil, weil das Doppelbindungsäquivalentgewicht des Bindemittels herabgesetzt, die Viskosität erniedrigt und die Bildung von höheren Kondensationsprodukten unterdrückt wird. Der Anteil an nicht umgesetzten mehrfunktionellen Acrylestern in dem Bindemittel kann beispielsweise bis zu 50 Gew.-% betragen. Sofern diese Ester flüchtig sind und einen störenden Eigengeruch haben, sollte ihr Anteil deutlich unter dieser Grenze gehalten werden.

Die formelmäßig gekennzeichneten Oligomeren haben ein Molekulargewicht zwischen 370 und 1000. Oligomere von höherem Molekulargewicht sind hochviskos oder fest und deshalb als Bindemittel nicht geeignet. Die erfindungsgemäßen Überzugs- und Bindemittel sind bei Raumtemperatur flüssig; ihre Viskosität bei 20°C soll 100 000 mPa s nicht überschreiten. Die bevorzugte Viskosität beträgt 5000 bis 70 000 mPa s bei 20°C, gemessen mit einem Rotations-Viskosimeter.

Für die Aushärtung der neuen Überzugs- und Bindemittel unter der Einwirkung von UV-Strahlung kann jeder bekannte UV-Initiator eingesetzt werden. Gebräuchliche UV-Initiatoren sind z. B.:

Benzophenon
Benzoinäther
ω-halogenierte Ketone, z. B. Trichloracetophenon
Benzildialkylketale
Thioxanthonderivate
Hydroxyalkylphenone
Diäthoxyacetophenon.

Die Initiatoren werden in den gebräuchlichen Mengen eingesetzt, die in der Regel zwischen 0,1 und 10 Gew.-%, vorzugsweise 2 bis 5 Gew.-% liegen. Die Härtung wird mit UV-Strahlung von 250 bis 400 nm ausgelöst und kann beispielsweise mit einer Quecksilber-Hochdrucklampe erzeugt werden. Die für die vollständige Aushärtung erforderliche Bestrahlungsdauer beträgt bei nicht-pigmentierten Überzügen je nach Schichtdicke 0,1 bis 10 sec. Pigmentierte Systeme erfordern eine wesentlich längere Bestrahlungsdauer. Die Härtung kann an Luft durchgeführt werden.

Die erfindungsgemäßen Überzugsmittel und Bindemittel können nach Zugabe eines UV-Initiators ohne sonstige Zusätze zur Herstellung klarer Überzüge eingesetzt werden. Häufig werden sie mit anderen Bindemitteln kombiniert, vor allem mit solchen, die ebenfalls durch UV-Strahlung härtbar sind. Als Beispiele wurden bereits mehrwertige Acrylester genannt. Sie können aus einem bei der Herstellung der Oligomeren angewendeten Überschuß stammen oder nachträglich zugegeben werden. Auch andere radikalisch polymerisierbare hochsiedende mono- oder polyfunktionelle Monomere, die mit den Oligomeren mischbar sind, können mitverwendet werden, beispielsweise Alkoxyalkylacrylate oder Methylenbisacrylamid. Diese niedermolekularen Verbindungen haben viel niedrigere Viskositäten als die Oligomeren und können zur Einstellung der Viskosität der Gesamtmischung zugesetzt werden.

Durch Zusatz von Farbstoffen, Pigmenten, Füllstoffen und/oder weiteren üblichen Hilfsstoffen erhält man Lacke, Druckfarben oder Beschichtungsmassen für viele Zwecke. Je nach den verwendeten

Zusätzen ergeben sie glänzende, halbmatte oder matte Überzüge.

Die neuen Überzugs- und Bindemittel werden im allgemeinen in einer Schichtdicke von 0,5 bis 20 µm auf das zu beschichtende Substrat aufgetragen und in der Regel unmittelbar danach gehärtet. Jede gebräuchliche Auftragstechnik ist anwendbar, z. B. Spritzen, Gießen, Tauchen, Walzenauftrag, Rakelauftrag oder Drucken. Als Substrate kommen alle festen Werkstoffe in Betracht, insbesondere flächige Werkstoffe. Nach der Härtung sind geschlossene Überzüge häufig ziemlich spröde und eignen sich in diesem Falle vorwiegend für Substrate von begrenzter Biegsamkeit. Zu den geeigneten Substraten gehören unter anderem Metalle, wie Stahl, Aluminium oder Kupfer, insbesondere in Form von Blechen oder Folien, Holz in Form von Sperrholz, Furnieren oder Spanplatten, Papier, Karton, Pappe, Kunststoffe in Form von Tafeln, Formkörpern oder Folien, wo sie z. B. die Funktion einer Weichmachersperre erfüllen können.

## Beispiel 1

296 g Trimethylolpropantriacrylat werden im Reaktionskolben vorgelegt und auf 50° C erhitzt. Schon während der Aufheizphase wird Schwefelwasserstoff zur Sättigung eingeleitet.

Nach kontinuierlicher Zugabe von 0,56 g äthanolischer Natriumhydroxidlösung als Katalysator nimmt die Absorption von Schwefelwasserstoff zu, und die Reaktionstemperatur steigt über 60° C an. Der günstigste Temperaturbereich liegt zwischen 53 und 55° C. Nach 3—4 Stunden sind 11,2 l Schwefelwasserstoff umgesetzt. Das viskose Addukt wird noch 1 Stunde bei 70° C gerührt und nach Zugabe von 3 g 85%iger Phosphorsäure im Wasserstrahlvakuum bei max. 70° C entgast.

| | |
|---|---|
| Viskosität: | 23 500 mPa s (23° C) |
| Geruch: | esterartig |
| Aussehen: | honiggelb, fast klar |
| Schwefelgehalt: | 4,5% |

## Beispiel 2

Durchführung wie Beispiel 1.

| | |
|---|---|
| Ansatz: | 226 g 1,6-Hexandioldiacrylat |
| | 11,2 l Schwefelwasserstoff |
| | 4,0 ml Triäthylamin |
| Viskosität: | 18 sec im 4-mm-DIN-Becher (23° C) |
| Geruch: | geruchlos |
| Aussehen: | leicht gelb, klar |
| Schwefelgehalt: | 6,0% |

## Beispiel 3

Durchführung wie Beispiel 1.

| | |
|---|---|
| Ansatz: | 251 g Pentaerythrittetraacrylat (3,3 Acrylatgruppen pro Molekül) |
| | 9,0 l Schwefelwasserstoff |
| | 4,5 ml Triäthylamin |
| Viskosität: | 68 000 mPa s (23° C) |
| Geruch: | geruchlos |
| Aussehen: | farblos, klar |
| Schwefelgehalt: | 3,8% |

## Beispiel 4

200 g Trimethylolpropantriacrylat werden zusammen mit 0,4 ml Triäthylamin vorgelegt. Bei Raumtemperatur werden 24,2 g Pentaerythrit-tetrakis-merkaptoessigsäureester zugetropft. Nach Erreichen der max. Reaktionstemperatur von 35° C wird 2 Stunden bei 50° C gerührt, anschließend 13 g 2-Hydroxypropylacrylat zusammen mit 0,4 ml Triäthylamin bei 50° C zugetropft und anschließend noch 1 Stunde bei dieser Temperatur gerührt.

Dem viskosen Produkt werden 0,8 g 85%ige Phosphorsäure zugesetzt.

| | |
|---|---|
| Viskosität: | 7100 mPa s (23° C) |
| Aussehen: | braun, klar |

## Anwendungsbeispiele

Die nach den obigen Beispielen hergestellten Überzugs- und Beschichtungsmittel, ggf. in Kombination mit anderen härtbaren Monomeren oder Pigmenten werden, soweit nachstehend nicht anders angegeben, mit 5 Gew.-%, bezogen auf das Bindemittel, Benzildimethylketal als UV-Initiator versetzt und in einer Schichtdicke von etwa 10 µm auf Kunstdruckpapier aufgerakelt und beim Durchlaufen unter zwei Quecksilber-Hochdrucklampen mit einer Leistung von 80 Watt pro Zentimeter Lampenlänge gehärtet. Durch allmähliche Steigerung der Durchlaufgeschwindigkeit wird jeweils die höchste Geschwindigkeit ($v_{max}$) ermittelt, mit der noch trockene und harte Filme entstehen.

### Beispiel 5

100 Teile Oligomeres aus Beispiel 1 $v_{max} = 100$ m/min.

### Beispiel 6

90 Teile Oligomeres aus Beispiel 1
10 Teile Trimethylolpropantriacrylat $v_{max} = 80$ m/min.

### Beispiel 7

90 Teile Oligomeres aus Beispiel 1
10 Teile 1,6-Hexandioldiacrylat $v_{max} = 60$ m/min.

### Beispiel 8

90 Teile Oligomeres aus Beispiel 1
10 Teile 2-Hydroxypropylacrylat $v_{max} = 70$ m/min.

### Beispiel 9

100 Teile Oligomeres aus Beispiel 3 $v_{max} = 130$ m/min.

### Beispiel 10

70 Teile Oligomeres aus Beispiel 3
30 Teile Trimethylolpropantriacrylat $v_{max} = 80$ m/min.

### Beispiel 11

100 Teile Oligomeres aus Beispiel 4 $v_{max} = 100$ m/min.

### Beispiel 12

100 Teile Oligomeres aus Beispiel 1
10 Teile Gelbpigment (Irgalith Gelb BAW) Schichtdicke 2—4 µm $v_{max} = 90$ m/min.

### Beispiel 13

100 Teile Oligomeres aus Beispiel 1
10 Teile Blaupigment (Sandorinblau 2 GLS) Schichtdicke 2—4 µm $v_{max} = 60$ m/min.

Beispiel 14

50 Teile Oligomeres aus Beispiel 1
50 Teile Titandioxid
11 Teile UV-Initiatorsystem aus 2-Isopropylthioxanthon, Dimethylneopentanolamin und Hydroxybenzophenon
Schichtdicke 1 – 2 µm – $v_{max}$ = 150 m/min
Schichtdicke 15 – 20 µm – $v_{max}$ = 150 m/min.

Das in Beispiel 14 verwendete System aus einem Thioxanthonderivat, einem anderen üblichen UV-Initiator und einem sekundären oder tertiären Amin ist für hochpigmentierte Überzugsmassen besonders vorteilhaft.

**Patentansprüche**

1. Flüssiges, durch UV-Strahlung in Gegenwart eines UV-Initiators härtbares Überzugs- und Bindemittel bestehend aus wenigstens einem Oligomeren der Formel

$$(CH_2{=}CH-CO-O)_mRO-CO-C_2H_4-(S-R')_n\ [S-C_2H_4-CO-OR(O-CO-CH{=}CH_2)_m]_p$$

worin

n = 0 oder 1,
m und p ganze Zahlen von 1 bis 3 sind, mit der Einschränkung, daß $p = p^n$ ist,
R einen (m + 1)-wertigen aliphatischen Rest mit 2 bis 12 Kohlenstoffatomen,
R' einen (p + 1)-wertigen organischen Rest mit einem Molekulargewicht von 28 bis 600 bedeuten,

mit einem Doppelbindungsäquivalentgewicht von höchstens 500 und einem Molekulargewicht zwischen 370 und 1000.

2. Überzugs- und Bindemittel nach Anspruch 1, dadurch gekennzeichnet, daß der organische Rest R' aus einem Kohlenwasserstoffrest mit vorzugsweise 2 bis 12 Kohlenstoffatomen oder aus mehreren derartigen, untereinander durch Äther- oder Estergruppen verbundenen Resten besteht.

3. Überzugs- und Bindemittel nach den Ansprüchen 1 und 2, dadurch gekennzeichnet, daß es als zusätzlichen Bestandteil einen UV-Initiator enthält.

4. Überzugs- und Bindemittel nach den Ansprüchen 1 bis 3, dadurch gekennzeichnet, daß es als zusätzliche härtbare Komponente hochsiedende radikalisch polymerisierbare Monomere enthält.

5. Überzugs- und Bindemittel nach den Ansprüchen 1 bis 4, gekennzeichnet durch eine Viskosität von 5000 bis 70 000 mPa s bei 20° C.

6. Überzugs- und Bindemittel nach Anspruch 3, dadurch gekennzeichnet, daß als UV-Initiator eine Kombination aus einem Thioxanthon-Derivat, einem anderen üblichen UV-Initiator und einem sekundären oder tertiären Amin angewendet wird.

7. Verfahren zur Herstellung eines UV-härtbaren Überzugs- und Bindemittels gemäß Anspruch 1, dadurch gekennzeichnet, daß man Schwefelwasserstoff oder ein mehrfunktionelles Merkaptan der Formel

$$HS-R'[SH]_p,$$

worin R' und p die im Anspruch 1 angegebene Bedeutung haben, in Gegenwart eines basischen Katalysators mit einem mehrfunktionellen Acrylester der Formel

$$(CH_2{=}CH-CO-O)_{m+1}R,$$

worin m und R die im Anspruch 1 angegebene Bedeutung haben, umsetzt, wobei je Moläquivalent des an Schwefel gebundenen Wasserstoffs wenigstens ein Mol des mehrfunktionellen Acrylesters eingesetzt wird.

**Claims**

1. Liquid coating and bonding agent which is hardenable by UV radiation in the presence of a UV initiator, consisting of at least one oligomer of the formula

$$(CH_2{=}CH-CO-O)_mRO-CO-C_2H_4-(S-R')_n\ [S-C_2H_4-CO-OR(O-CO-CH{=}CH_2)_m]_p$$

wherein

n = 0 or 1
m and p are integers from 1 to 3, with the limitation that $p = p^n$,
R represents an aliphatic group having a valency of $(m+1)$ and 2 to 12 carbon atoms,
R′ represents an organic group having a valency of $(p+1)$ and a molecular weight of 28 to 600,

with a double bond equivalent weight of not more than 500 and a molecular weight of between 370 and 1000.

2. Coating and bonding agent as claimed in claim 1, characterised in that the organic group R′ consists of a hydrocarbon group with preferably 2 to 12 carbon atoms or of a plurality of such groups connected to one another by ether or ester groups.

3. Coating and bonding agent as claimed in claims 1 and 2, characterised in that it contains a UV initiator as an additional component.

4. Coating and bonding agent as claimed in claims 1 to 3, characterised in that it contains high-boiling radically polymerisable monomers as an additional hardenable component.

5. Coating and bonding agent as claimed in claims 1 to 4, characterised by a viscosity of from 5000 to 70,000 mPa s at 20° C.

6. Coating and bonding agent as claimed in claim 3, characterised in that a combination of a thioxanthone derivative, another conventional UV initiator and a secondary or tertiary amine is used as the UV initiator.

7. Process for the preparation of a coating and bonding agent hardenable by UV as claimed in claim 1, characterised in that hydrogen sulphide or a polyfunctional mercaptan of formula

$$HS-R'[SH]_p$$

wherein R′ and p are defined as in claim 1, ist reacted, in the presence of a basic catalyst, with a polyfunctional acrylic ester of formula

$$(CH_2=CH-CO-O)_{m+1}R$$

wherein m and R are defined as in claim 1, at least 1 mol of the polyfunctional acrylic ester being used for each molar equivalent of sulphur-bonded hydrogen.

**Revendications**

1. Produit de revêtement et liant liquide, durcissable par les radiations ultraviolettes en présence d'un inducteur UV, consistant en au moins un oligomère de formule

$$(CH_2=CH-CO-O)_mRO-CO-C_2H_4-(S-R')_n\ [S-C_2H_4-CO-OR(O-CO-CH=CH_2)_m]_p$$

dans laquelle

n = 0 ou 1,
m et p sont des nombres entiers allant de 1 à 3, avec la limitation que $p = p^n$,
R est un reste aliphatique contenant 2 à 12 atomes de carbone et de valence $m = 1$,
R′ est un reste organique de poids moléculaire 28 à 600 et de valence $p + 1$,

avec un poids équivalent par rapport aux doubles liaisons de 500 au maximum et un poids moléculaire de 370 à 1.000.

2. Produit de revêtement et liant selon la revendication 1 caractérisé en ce que le reste organique R′ consiste un un reste hydrocarboné contenant de préférence de 2 à 12 atomes de carbone ou en plusieurs restes de ce type reliés entre eux par des groupes éther ou ester.

3. Produit de revêtement et liant selon les revendications 1 et 2 caractérisé en ce qu'il contient, en tant que constituant supplémentaire, un inducteur UV.

4. Produit de revêtement et liant selon les revendications 1 à 3 caractérisé en ce qu'il contient des monomères à haut point d'ébullition aptes à la polymérisation radicalaire en tant que composants durcissables supplémentaires.

5. Produit de revêtement et liant selon les revendications 1 à 4 caractérisé par une viscosité de 5.000 à 70.000 mPa s à 20° C.

6. Produit de revêtement et liant selon la revendication 3 caractérisé en ce que l'on utilise en tant qu'inducteur UV une combinaison d'un dérivé de la thioxanthone, d'un autre inducteur UV usuel et d'une amine secondaire ou tertiaire.

7. Procédé de préparation d'un produit de revêtement et liant durcissable aux UV selon la revendication 1 caractérisé en ce que l'on fait réagir l'hydrogène sulfuré ou un mercaptan polyfonctionnel de formule

$$HS-R'[SH]_p,$$

dans laquelle R' et p ont les significations indiquées dans la revendication 1, en présence d'un catalyseur basique, avec un ester acrylique polyfonctionnel de formule

$$(CH_2=CH-CO-O)_{m+1}R,$$

dans laquelle m et R ont les signification indiquées dans la revendication 1, en mettant en oeuvre au moins 1 mole de l'ester acrylique polyfonctionnel par équivalent molaire de l'hydrogène fixé au souffre.